# DEMANDE DE BREVET EUROPEEN

(11) **EP 4 250 680 A1**
(43) Date de publication de la demande: **27.09.2023**
(21) Numéro de dépôt: 23163021.1
(22) Date de dépôt: 21.03.2023
(51) Int. Cl.: H04L 51/06, H04L 51/214, H04L 67/565, G06K 7/10

(54) **PROCEDES RELATIFS AUX UTILISATIONS DE CODES DE COMMANDE ET A L ASSOCIATION DE TERMINAUX, PREMIER TERMINAL, DEUXIEME TERMINAL ET DISPOSITIF DE GESTION DE CODES DE COMMANDE**

(30) Priorité: 23.03.2022 FR 2202565
(71) Demandeur: Orange, 92130 Issy-les-Moulineaux (FR)
(72) Inventeur: KIRSCHBAUM, Patrick, 92326 Chatillon (FR); BENDIABDALLAH, Halim, 92326 Chatillon (FR); CARBOU, Romain, 92326 Châtillon (FR)

(57) **Abrégé**

L'invention concerne les codes de commande et leurs utilisations : notamment une lecture et un contrôle en fonction d'un code de commande lu.

Un objet de l'invention est un procédé de gestion de codes de commande mis en oeuvre par un dispositif de gestion de codes de commande comportant une émission d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

Ainsi, les codes de commande sont utilisables de manière plus large, c'est-à-dire notamment par des terminaux non équipés de dispositif de lecture comme des objets connectés, ou des terminaux non équipés de dispositif de reproduction.

## Description

### Domaine technique

L'invention concerne les codes de commande et leurs utilisations : notamment une lecture et un contrôle en fonction d'un code de commande lu. Les codes de commande sont notamment des codes-pictogrammes à N dimensions. Les codes de commande les plus connus sont des codes-pictogrammes à deux dimensions tels que les codes à réponse rapide, notamment les codes QR (ou « Quick Response » en anglais), les Flashcodes^{™} ou les codes 2D-DOC.

### État de la technique

Actuellement, les codes QR, Flashcodes_{TM} et codes 2D-DOC sont captés et décodés par un seul et même terminal qui comporte un lecteur de codes qui décode le code immédiatement après l'avoir lu. Ainsi, une lecture de codes déclenche rapidement sur le terminal la mise en oeuvre d'une commande telles que des actions de navigation sur Internet (visite de site Internet, ajout d'une adresse Internet en marque-page, affichage d'un point sur une carte...), de lecture d'un contenu multimédia en ligne, de connexion à point d'accès d'un réseau local (borne Wifi, par exemple), déclencher un appel ou une émission d'un message (SMS, courriel, etc.), gestion des contacts/agenda (ajout, modification, etc.), activer un paiement, etc.

Or, le terminal lecteur du code de commandes n'est pas toujours le plus adapté pour la mise en oeuvre des commandes : ressources de connexion, ressources de reproduction, ressources de mise en oeuvre des traitements, etc. Il est en effet plus pratique et agréable dans le cas le plus usuel de l'accès à une page web de pouvoir gérer celle-ci directement sur l'écran d'un ordinateur dans son environnement OS.

Et, inversement, le terminal le plus apte à mettre en oeuvre la commande d'un code de commande n'est pas toujours le plus adapté à lire un code de commandes, notamment le terminal ne sera pas nomade (ordinateur fixe, téléviseur, etc.), ou même s'il l'est, sa manipulation peut être délicate pour capter le code de commande rendant la lecture de certains codes de commande impossible pour ces terminaux (par exemple la manipulation d'une tablette, d'un ordinateur portable est plus délicate que celle d'un smartphone).

De plus, un terminal qui ne sera pas doté d'interface homme-machine, notamment de caméra et/ou de processeur de commandes ne pourra donc pas être doté d'un lecteur de codes de commande et ne pourra donc pas être contrôler au moyen de tels codes de commande, c'est particulièrement le cas d'un grand nombre des objets connectés : porte-clés, montres, thermostats, ampoules...

S'il existe pléthore d'applications permettant de gérer son téléphone mobile à partir d'un ordinateur en local, ces applications spécifiques au téléphone mobile permettent uniquement à l'utilisateur de piloter son téléphone mobile à partir d'une interface spécifique au téléphone mobile affichée par l'ordinateur.

### Exposé de l'invention

Un des buts de la présente invention est de remédier à des inconvénients/insuffisances de l'état de la technique/ d'apporter des améliorations par rapport à l'état de la technique.

Un objet de l'invention est un procédé de gestion de codes de commande mis en oeuvre par un dispositif de gestion de codes de commande comportant une émission d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

Ainsi, les codes de commande sont utilisables de manière plus large, c'est-à-dire notamment par des terminaux non équipés de dispositif de lecture apte à lire des codes de commande comme des objets connectés, ou des terminaux non équipés de dispositif de reproduction pour reproduire le résultat d'une mise en œuvre d'une commande déclenchée par un code de commande, tel qu'une douchette de lecture de code de commande. Et aussi, chaque action relative au code de commandes :lecture, mise en œuvre, reproduction d'un résultat d'une commande déclenchée par un code de commande peut être effectuée par le terminal plus approprié : terminal facilement manipulable pour lire un code de commande quel que soit son emplacement (smartphone, lecteur de codes de commande aussi nommés douchette...), et terminal comportant un écran voire un écran de taille plus appropriée.

Avantageusement, le signal de commande comporte une des données suivantes :
- le code de commande reçu,
- une commande d'un composant du deuxième terminal, la commande étant déterminée par un décodage du code de commande reçu.

Ainsi, dans la première option, le décodage du code de commande est effectué par le deuxième terminal. Cela permet une utilisation limitée des ressources réseaux puisque seul le code de commande est transmis sur le réseau entre le dispositif de gestion de codes de commande et le deuxième terminal, et de limiter l'utilisation des ressources de calculs du dispositif de gestion de codes de commande puisque le décodage du code de commande est effectué par le deuxième terminal.

La deuxième option permet quant à elle l'utilisation du code de commande pour commander des deuxièmes terminaux non dotés de décodeur de codes de commande, notamment des objets connectés, en particulier lorsque le deuxième terminal a des ressources de calculs limités ne permettant pas la mise en œuvre d'un décodeur de codes de commande. Ainsi, le décodeur de codes de commande est déporté dans le dispositif de gestion de codes de commande implémentés notamment dans un serveur de médiation d'objets connectés aptes à commandes à distance des objets connectés.

Un autre objet de l'invention est un procédé de contrôle mis en œuvre par un deuxième terminal ayant été associé à un premier terminal duquel est reçu un code de commande par un dispositif de gestion de codes de commande dont un signal de commande est fonction comportant une réception du signal de commande provenant du dispositif de gestion de codes de commande, le code de commande ayant été reçu par le premier terminal préalablement à l'émission et après l'association des premier terminal et deuxième terminal.

Avantageusement, le procédé de contrôle comporte un décodage d'un code de commande, le signal de commande reçu comportant le code de commande préalablement transmis par le premier terminal au dispositif de gestion de codes de commande.

Un objet de l'invention est également un procédé de lecture de codes de commande mis en œuvre par un premier terminal comportant une émission par le premier terminal d'un code de commande à destination d'un dispositif de gestion de codes de commande, l'émission étant déclenchée par une réception par le premier terminal du code de commande, le code de commande émis par le premier terminal déclenchant une émission, par le dispositif de gestion de codes de commande, d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

Un objet de l'invention est encore un procédé d'installation de terminaux associés par un dispositif de gestion de codes de commande comportant :
- un chargement d'un traitement de contrôle à destination d'un deuxième terminal,
- un chargement d'un traitement de lecture distant à destination d'un premier terminal, et
- un enregistrement de terminaux associés comportant le premier terminal et le deuxième terminal, l'enregistrement étant effectué préalablement à une réception de codes de commande par le premier terminal.

Avantageusement, le chargement d'un traitement de contrôle à destination du deuxième terminal déclenche une émission par le deuxième terminal des terminaux associés au dispositif de gestion de codes de commande.

Avantageusement, le procédé d'installation de terminaux associés comporte une émission d'un signal d'installation à destination du premier terminal des terminaux associés, le signal d'installation permettant le chargement, par le dispositif de gestion de codes de commande, d'un traitement de lecture distant à destination du premier terminal.

Un objet de l'invention est aussi un procédé d'association de terminaux traitant des codes de commande mis en œuvre par un deuxième terminal, le procédé d'association comportant :
- une association d'un premier terminal et du deuxième terminal formant des terminaux associés, et
- une émission des terminaux associés à destination d'un dispositif de gestion de codes de commande préalablement à une réception d'un code de commande par le premier terminal.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un premier terminal et/ou un deuxième terminal et/ ou un dispositif de gestion de codes de commande et étant conçus pour commander l'exécution des différentes étapes de ce procédé.

L'invention vise donc aussi un programme comprenant des instructions de code de programme pour l'exécution des étapes du procédé de gestion de codes de commande, et/ou du procédé de contrôle, et/ou du procédé de lecture de codes de commande, et/ou du procédé d'installation, et/ou du procédé d'association lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est un dispositif de gestion de codes de commande comportant un émetteur d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

Avantageusement, le dispositif de gestion de codes de commande comporte :
- un chargeur de traitements apte à charger un traitement de contrôle à destination d'un deuxième terminal et un traitement de lecture distant à destination d'un premier terminal ; et
- un enregistreur de terminaux associés comportant le premier terminal et le deuxième terminal, l'enregistrement étant effectué préalablement à une réception de codes de commande par le premier terminal.

Un objet de l'invention est encore un deuxième terminal ayant été associé à un premier terminal duquel est reçu un code de commande par un dispositif de gestion de codes de commande dont un signal de commande est fonction comportant un récepteur du signal de commande provenant du dispositif de gestion de codes de commande, le code de commande ayant été reçu par le premier terminal préalablement à l'émission et après l'association des premier terminal et deuxième terminal.

Avantageusement, le deuxième terminal comporte un coupleur apte à associer un premier terminal et un deuxième formant des terminaux associés et à émettre les terminaux associés à destination d'un dispositif de gestion de codes de commande préalablement à une réception d'un code de commande par le premier terminal.

Un objet de l'invention est encore un premier terminal comportant :
- un lecteur de codes de commande apte à recevoir un code de commande lu, et
- un émetteur de codes de commande à destination d'un dispositif de gestion de codes de commande,

le lecteur de codes de commande commandant l'émetteur de codes de commande lors d'une réception d'un code de commandes,
le code de commande émis par le premier terminal déclenchant une émission, par le dispositif de gestion de codes de commande, d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

### Brève description des dessins

Les caractéristiques et avantages de l'invention apparaîtront plus clairement à la lecture de la description, faite à titre d'exemple, et des figures s'y rapportant qui représentent :
Figure 1, un schéma simplifié d'un diagramme d'utilisation d'un code de commande selon l'invention,
Figure 2, un schéma simplifié d'un diagramme d'enregistrement de l'association de terminaux pour la mise en œuvre lors de l'utilisation de codes de commande selon l'invention,
Figure 3, un schéma simplifié d'une architecture de communication comportant le premier terminal, le dispositif de gestion de codes de commande et le deuxième terminal selon l'invention,
Figure 4a, un schéma simplifié d'enregistrement d'une association de terminaux préalable à l'utilisation de codes de commande selon l'invention,
Figure 4b, un schéma simplifié d'un ajout d'un deuxième terminal à un enregistrement d'une association de terminaux préalable à l'utilisation de codes de commande selon l'invention,
Figure 4c, un schéma simplifié d'une connexion de premier terminal et deuxième terminal à un dispositif de gestion de codes de commande préalable à l'utilisation de codes de commande selon l'invention,
Figure 5, un schéma simplifié d'un transfert d'un code de commande d'un premier terminal à un deuxième terminal selon l'invention,
Figure 6a, un schéma simplifié d'un transfert d'un code de commande comportant une adresse Internet d'un premier terminal mobile à un deuxième terminal ordinateur implémentant dispositif/application de réception et décodage du code de commande selon l'invention,
Figure 6b, un schéma simplifié d'un transfert d'un code de commande comportant une adresse Internet d'un premier terminal mobile à un deuxième terminal ordinateur implémentant un navigateur Internet comportant un dispositif/plug-in de réception et décodage du code de commande selon l'invention,
Figure 6c, un schéma simplifié d'un transfert d'un code de commande d'un premier terminal mobile à un deuxième terminal mobile implémentant un dispositif/application de réception et décodage du code de commande selon l'invention,
Figure 6d, un schéma simplifié d'un transfert d'un code de commande d'un premier terminal mobile à un deuxième terminal objet connecté, le dispositif de gestion de codes de commande comportant un serveur de médiation de l'Internet des objets permettant de commander les objets connectés en fonction du code de commande selon l'invention.

### Description des modes de réalisation

Par code de commande est entendu une représentation notamment graphique d'une donnée technique comme une adresse Internet, un identifiant de connexion (numéro de téléphone, adresse IP, etc.), un mot de passe de connexion à un point d'accès ou à un terminal de communication (mots de passe Wifi, Bluetooth, etc.), un message y compris un message de commande (notamment SMS, MMS, IM, etc.), etc.

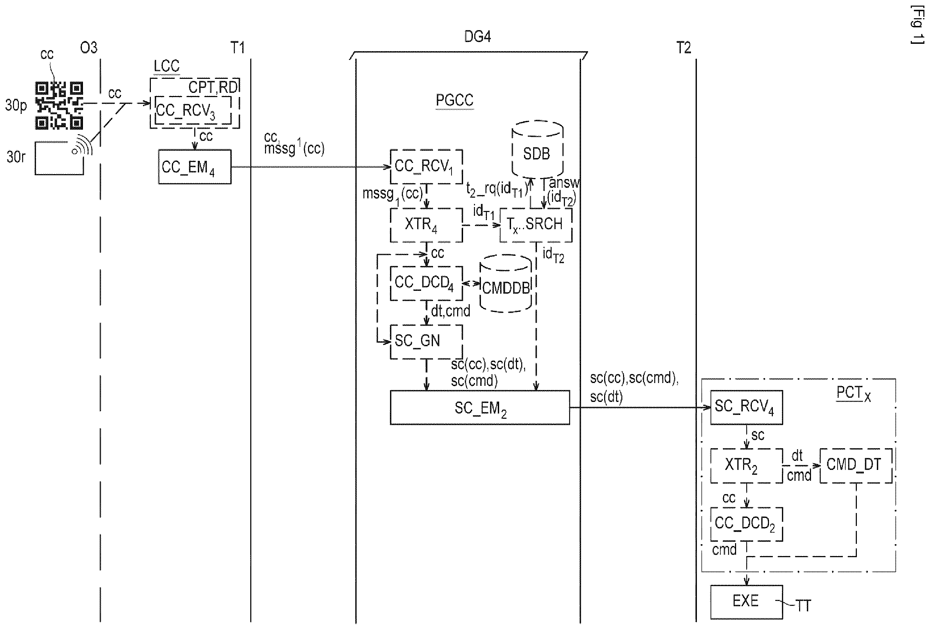

La figure 1 illustre un schéma simplifié d'un diagramme d'utilisation d'un code de commande selon l'invention.

Le code de commande cc est lu LCC par un premier terminal T1, géré PGCC par un dispositif de gestion de codes de commande DG4 placés en intermédiaire entre le premier terminal T1 et un deuxième terminal T2, et déclenche une mise en œuvre d'une commande fonction du code de commande PCTx dans le deuxième terminal T2. Le premier terminal T1, le deuxième terminal T2 et le dispositif de gestion DG4 sont des dispositifs distincts. le dispositif de gestion DG4 est notamment connecté au premier terminal T1 et au deuxième terminal T2 via un ou plusieurs réseaux de communication.

Un mode de réalisation de l'utilisation d'un code de commande selon l'invention comporte la mise en œuvre respectivement d'un procédé de lecture de codes de commande LCC par le premier terminal T1, d'un procédé de gestion de codes de commande PGCC par le dispositif de gestion de codes de commande DG4 et d'un procédé de contrôle PCTx par le deuxième terminal T2.

Le procédé de gestion PGCC de codes de commande mis en œuvre par le dispositif de gestion de codes de commande DG4 comporte une émission d'un signal de commande SC_EM₂ à destination d'un deuxième terminal T2. Le signal de commande sc est fonction d'un code de commande cc reçu d'un premier terminal T1. Le code de commande cc ayant été préalablement reçu par le premier terminal T1. Le premier terminal T1 et le deuxième terminal T2 sont associés (id_{T1},id_{T2}) préalablement à une réception CC_RCV₃ d'un code de commande cc par le premier terminal T1.

En particulier, le signal de commande sc comporte une des données suivantes :
- le code de commande cc reçu,
- une commande cmd d'un composant du deuxième terminal T2, la commande cmd étant déterminée par un décodage CC_DCD₄ du code de commande cc reçu .

Le procédé de contrôle PCTx mis en œuvre par un deuxième terminal T2 comporte une réception SC_RCV₄ d'un signal de commande sc provenant d'un dispositif de gestion de codes de commande DG4. Le signal de commande sc est fonction d'un code de commande cc reçu par le dispositif de gestion de codes de commande DG4 d'un premier terminal T1. Le code de commande cc est préalablement reçu par le premier terminal T1. Le premier terminal T1 est associé au deuxième terminal T2 préalablement à une réception CC_RCV₃ du code de commande cc par le premier terminal T1.

En particulier, le procédé de contrôle PCTx comporte un décodage CC_DCD₂ d'un code de commande cc. Le signal de commande reçu sc comporte le code de commande cc préalablement transmis CC_EM₄ par le premier terminal T1 au dispositif de gestion de codes de commande DG4.

Le procédé de lecture de codes de commande LCC mis en œuvre par un premier terminal T1 comporte une émission CC_EM₄ par le premier terminal T1 d'un code de commande cc à destination d'un dispositif de gestion de codes de commande DG4. L'émission CC_EM₄ est déclenchée par une réception CC_RCV₃ par le premier terminal T1 du code de commande cc. Le code de commande cc émis par le premier terminal T1 déclenche une émission CC_EM₂, par le dispositif de gestion de codes de commande DG4, d'un signal de commande sc à destination d'un deuxième terminal T2. Le deuxième terminal T2 est associé au premier terminal T1 préalablement à une réception du code de commande CC_RCV₃ par le premier terminal T1.

En particulier, le procédé de lecteur de codes de commande LCC comporte une réception d'un code de commande CC_CRV₃ par le premier terminal T1 en provenance d'un objet O3.

Dans un premier mode de réalisation, le code de commande cc est notamment inclus dans un pictogramme à N dimensions reproduit sur un troisième objet O3 tel qu'un document 30p (affiche; étiquette apposée sur un objet tel qu'un dispositif électronique, un emballage de produit... ; un ouvrage relié : livre, journal, magazine... ; etc.) ou sur un écran notamment d'un troisième objet consistant en un dispositif électronique, aussi nommé troisième terminal, tel qu'un dispositif de communication : smartphone, télévision, etc. ou un simple dispositif électronique d'affichage : moniteur, écran publicitaire... Le code de commande cc est alors une représentation graphique d'une donnée technique.

Dans ce premier mode de réalisation, le procédé de lecture LCC de code de commande comporte notamment une capture du code de commande CPT par le premier terminal T1 comportant la réception du code de commande CC_RCV₃. La capture CPT est notamment un scan, une capture photographique ou vidéo, etc. du pictogramme 30p. La réception du code de commande CC_RCV₃ est alors respectivement la réception d'un document résultant du scan du pictogramme 30p, d'une image résultant de la capture photographique ou vidéo du pictogramme 30p, etc. contenant le code de commande inclus dans le pictogramme 30p.

Dans un deuxième mode de réalisation, le code de commande cc est, par exemple, stocké dans une mémoire d'un dispositif de communication à courte portée 30r, aussi nommé troisième terminal O3. Par communications à courte portée sont entendues les communications point à point en champ proche généralement de l'ordre du cm, tel que celles utilisées par les technologies RFID, NFC, etc.

Le code de commande stocké dans le dispositif de communication à courte portée est notamment un code graphique, tel qu'un pictogramme à N dimensions.

Dans ce deuxième mode de réalisation, le procédé de lecture de code de commande comporte notamment une lecture du code de commande CC_RD comportant la réception du code de commande CC_RCV₃. La réception du code de commande CC_RCV₃ est alors la réception du code de commande stocké dans la mémoire 30r du troisième terminal O3. En particulier, le procédé de lecture CC_RD comporte une émission RD_EM₃ à destination du troisième terminal O3 d'une requête de lecture rd_rq (non illustré). La requête de lecture rd_rq est une requête apte à déclencher une émission CC_EM₁ (non illustrée) par le troisième terminal O3 du code de commande cc stocké dans sa mémoire 30r, en particulier à destination du premier terminal T1.

Ainsi, le code de commande reçu cc par le premier terminal T1 est émis par le procédé de lecture LCC lors de l'émission CC_EM₄ du code de commande à destination du dispositif de gestion de codes de commande DG4, notamment sous la forme d'un premier message comportant le code de commande msgg₁(cc).

En particulier, le procédé de gestion de codes de commande PGCC comporte une réception de code de commande CC_RCV₁ provenant d'un premier terminal T1 ayant reçu le code de commande stocké dans, reproduit par ou apposé sur un troisième objet O3 tel qu'un troisième terminal. Notamment, la réception du code de commande CC_RCV₁ par le dispositif de gestion DDG4 consiste en la réception du premier message msgg₁(cc) comportant le code de commande en provenance du premier terminal T1.

En particulier, le procédé de gestion de codes de commande PGCC comporte une extraction XTR₄ par le dispositif de gestion DG4 du code de commande cc du premier message mssg1(cc) reçu du premier terminal T1.

Eventuellement, le procédé de gestion de codes de commande PGCC comporte un décodage de code de commande CC_DCD4 par le dispositif de gestion DG4 qui fournit la ou les données techniques dt codé dans le code de commande cc, notamment une commande cmd. En particulier, le décodage CC_DCD₄ comporte une récupération d'une commande cmd en fonction du code de commande cc ou des données techniques dt incluses dans le code de commande dans une base de commande CMDDB.

En particulier, le procédé de gestion de codes de commande PGCC comporte une génération SC_GN d'un signal de commande sc comportant soit le code de commande cc reçu CC_RCV1 par le dispositif de gestion DG4, soit le code de commande cc extrait XTR₄ du premier message mssg1(cc) reçu CC_RCV1 par le dispositif de gestion DG4, soit la(les) donnée(s) technique(s) dt ou la commande cmd décodée(s) CC_DCD₄ du code de commande cc reçu CC_RCV1 par le dispositif de gestion DG4 : sc(cc), sc(dt), sc(cmd).

Le signal de commande ainsi généré sc(cc), sc(dt), sc(cmd) est émis SC_EM₂ à destination d'un deuxième terminal T2 associé au premier terminal T1 ayant reçu (capté, lu) le code de commande cc.

En particulier, le procédé de gestion de codes de commande PGCC comporte une recherche de terminaux associés Tx_SRCH en fonction du premier terminal T1 ayant transmis le code de commande cc, mssg₁(cc). Le deuxième terminal T2 est associé au premier terminal T1 préalablement à la réception du code de commande CC_RCV₃ par le premier terminal T1. La recherche Tx_SRCH est notamment fonction de l'identifiant du premier terminal idT1 et fournit un résultant sous forme d'identifiant d'un deuxième terminal idT2.

Par terminaux associés atx est entendu des données associées relatives aux terminaux associées tels que des identifiants associés des terminaux associés et/ou des adresses associées des terminaux associées...

Notamment, la recherche Tx_SRCH est effectuée dans une base de terminaux associés SDB. Par exemple, la recherche Tx_SRCH requiert t_{2_}rq(id_{T1}) à la base de terminaux associés SDB le deuxième terminal T2 associé au premier terminal T1 ayant transmis le code de commande cc, puis reçoit de la base de terminaux associés SDB une réponse answ(id_{T2}) relative au deuxième terminal T2 associé à ce premier terminal T1.

En particulier, l'extraction XTR₄ extrait du premier message reçu mssg₁(ccc) un identifiant du premier terminal id_{T1} et le fournit à la recherche de terminaux associés Tx_SRCH.

Le deuxième terminal T2 associé au premier terminal T1 ainsi déterminé par la recherche de terminaux associés Tx_SRCH est utilisé comme destinataire de l'émission SC_EM₂ du signal de commande sc fonction du code de commande cc reçu par le premier terminal T1.

En particulier, le procédé de contrôle PCTx comporte une extraction XTR₂ par le deuxième terminal T2 du contenu du signal de commande sc reçu du dispositif de gestion DG4, notamment du code de commande cc, de données techniques dt, de commande cmd.

En particulier, lorsque le signal de commande sc reçu SC_RCV₄ par le deuxième terminal T2 associé au premier terminal T1 ayant reçu (capté, lu) le code de commande cc stocké, reproduit, affiché comporte le code de commande cc : sc(cc), le procédé de contrôle PCTx comporte un décodage de code de commande CC_DCD₂ par le deuxième terminal T2 qui fournit la ou les données techniques dt codé dans le code de commande cc, notamment une commande cmd. En particulier, le décodage CC_DCD₂ comporte une récupération d'une commande cmd en fonction du code de commande cc ou des données techniques dt incluses dans le code de commande dans une base de commande CMDDB.

Dans ce cas, les procédés de lecture LCC, de gestion PGCC et de contrôle PCTx permettent un transfert d'un code de commande cc lu/capté par le premier terminal T1 vers un deuxième terminal T2 associé à ce premier terminal pour être utilisé par ce deuxième terminal T2 au lieu du premier terminal T1 comme cela est systématiquement le cas dans l'état de la technique: un seul et même terminal lisant et utilisant le code de commande.

En particulier, lorsque le signal de commande sc reçu SC_RCV₄ par le deuxième terminal T2 associé au premier terminal T1 ayant reçu (capté, lu) le code de commande cc stocké, reproduit, affiché comporte des données techniques tels qu'une adresse Internet, un identifiant de connexion, etc., le procédé de contrôle PCTx comporte une détermination d'une commande CMD_DT en fonction des données techniques. Notamment, en fonction du type de données techniques est, éventuellement, déterminé le traitement mis en oeuvre par le deuxième terminal T2 et/ou le composant du deuxième terminal à commander en utilisant les données techniques puis, le cas échéant, généré une commande cmd fonction des données techniques dt et/ou du traitement ou composant à commander.

Ainsi, la commande cmd extraite du signal de commande sc(cmd), décodée ou déterminée en fonction du signal de commande sc(cc), sc(dt) reçu par le deuxième terminal T2 est mise en oeuvre EXE par le deuxième terminal T2, notamment par un traitement TT mis en oeuvre par ou par un composant du deuxième terminal T2.

Dans le cas où le deuxième terminal T2 est un objet connecté, le dispositif de gestion DG4 consiste ou comporte un serveur d'intermédiation apte à commander des objets connectés. Alors, le dispositif de gestion DG4 émet SC_EM₂ un signal de commande sc consistant en une commande cmd d'objets connectés fonction du code de commande cc reçu par le dispositif de gestion DG4 en provenance du premier terminal T1.

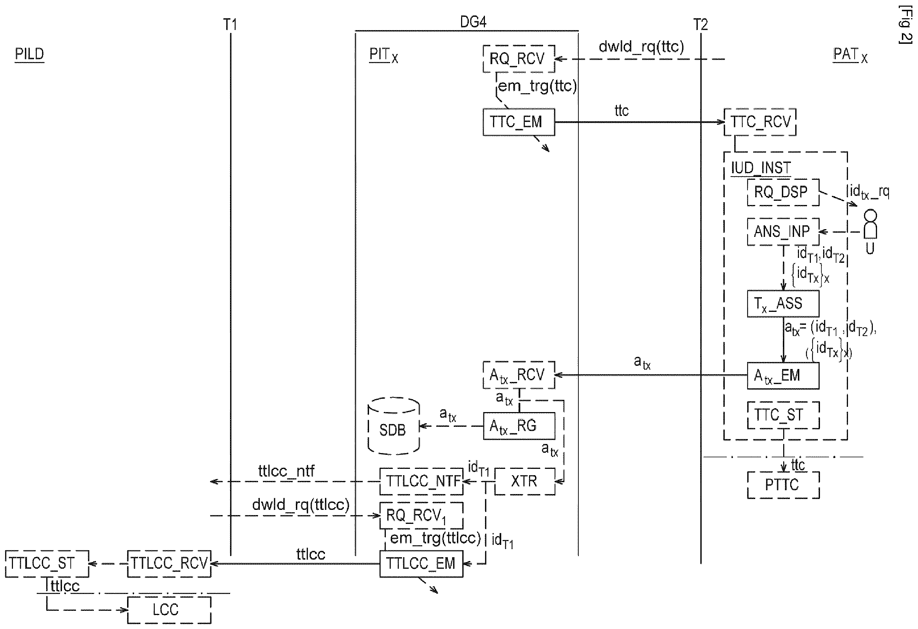

La figure 2 illustre un schéma simplifié d'un diagramme d'enregistrement de l'association de terminaux pour la mise en oeuvre lors de l'utilisation de codes de commande selon l'invention.

Un procédé d'installation de terminaux associés PITx par un dispositif de gestion de codes de commande DG4 comporte :
- un chargement d'un traitement de contrôle TTC_EM à destination d'un deuxième terminal T2,
- un chargement d'un traitement de lecture distant TTLCC_EM à destination d'un premier terminal T1, et
- un enregistrement Atx_RG de terminaux associés atₓ comportant le premier terminal T1 et le deuxième terminal T2.
Les terminaux associés atₓ sont reçus Atx_RCV du deuxième terminal T2. L'enregistrement Atx_RG est effectué préalablement à une réception CC_RCV₃ de codes de commande cc par le premier terminal T1.

En particulier, le chargement d'un traitement de contrôle TTC_EM à destination du deuxième terminal T2 déclenche une émission Atx_EM par le deuxième terminal T2 des terminaux associés atx au dispositif de gestion de codes de commande DG4.

En particulier, le procédé d'installation PITx comporte une émission TTLCC_NTF d'un signal d'installation ttlc_ntf à destination du premier terminal T1 des terminaux associés atx. Le signal d'installation ttlcc_ntf permet le chargement TTLCC_EM, par le dispositif de gestion de codes de commande DG4, d'un traitement de lecture distant à destination du premier terminal T1.

Notamment, suite à l'émission TTLCC_NTF d'un signal d'installation ttlc_ntf à destination du premier terminal T1, le procédé d'installation PITx comporte une réception RQ_RCV₁ d'une requête de chargement de traitement de lecture distant dwld_rq(ttlcc) provenant du premier terminal T1.

La réception RQ_RCV₁ de la requête de chargement de traitement de lecture distant dwld_rq(ttlcc) provenant du premier terminal T1 déclenche em_trg(ttlcc) le chargement du traitement de lecture distant TTLCC_EM par le dispositif de gestion DG4 à destination du premier terminal T1.

Un procédé d'association de terminaux PATx traitant des codes de commande mis en œuvre par un deuxième terminal T2 comporte:
- une association Tx_ASS d'un premier terminal T1 et du deuxième terminal T2 formant des terminaux associés atx : par exemple, atx=(id_{T1}, id_{T2}),({idTx}) et
- une émission Atx_EM des terminaux associés à destination d'un dispositif de gestion de codes de commande préalablement à une réception d'un code de commande par le premier terminal.

En particulier, une requête de chargement d'un traitement de contrôle dwld_rq(ttc) est émise du deuxième terminal T2 à destination du dispositif de gestion DG4 déclenchant l'association de terminaux Tx_ASS notamment du deuxième terminal T2 à un premier terminal T1 pour une utilisation distante de codes de commande.

En particulier, le procédé d'installation de terminaux associés PITx mis en œuvre par le dispositif de gestion DG4 comporte une réception de requête RQ_RCV₂ recevant la requête de chargement de traitement de contrôle dwld_rq(ttc) provenant du deuxième terminal T2.

La réception RQ_RCV₂ de la requête de chargement de traitement de contrôle dwld_rq(ttc) provenant du deuxième terminal T2 déclenche em_trg(ttc) le chargement du traitement de contrôle TTC_EM par le dispositif de gestion DG4 à destination du deuxième terminal T2.

En particulier, le procédé d'association de terminaux PATx comporte une réception TTC_RCV du traitement de contrôle ttc du dispositif de gestion DG4 par le deuxième terminal T2.

En particulier, le procédé d'association de terminaux PATx comporte une installation d'une interface d'utilisation de code de commande à distance IUT_INST mettant en œuvre l'association de terminaux Tx_ASS et l'émission des terminaux associés Atx_EM à destination du dispositif de gesttion DG4.

En particulier, le procédé d'association de terminaux PATx comporte une réception d'interaction ANS_INP d'un utilisateur U comportant des données relativesà au moins un premier terminal , notamment des identifiants ou adresse de terminaux idT1, {idTx}ₓ, à associer au deuxième terminal, voire à un ou plusieurs deuxièmes terminaux supplémentaires à associer au premier terminal et au deuxième terminal mettant en œuvre le procédé d'association de terminaux PATx. Notamment, l'installation d'une interface d'utilisation de code de commande à distance IUT_INST comporte la réception d'interaction ANS_INP d'un utilisateur U.

En particulier, le procédé d'association de terminaux PATx comporte une reproduction d'une requête RQ_DSP de fourniture de terminaux à associer idₜₓ_rq à destination d'un utilisateur U du deuxième terminal. La réception d'interaction ANS_INP est déclenchée par la reproduction de requête RQ_DSP à laquelle l'utilisateur U répond lors de son interaction au moyen d'une interface utilisateur du deuxième terminal T2. Notamment, l'installation d'une interface d'utilisation de code de commande à distance IUT_INST comporte la reproduction d'une requête RQ_DSP de fourniture de terminaux à associer.

En particulier, l'installation d'une interface d'utilisation de code de commande à distance IUT_INST sur le deuxième terminal comporte l'installation TTC_ST du traitement de contrôle reçu ttc permettant ensuite au deuxième terminal de mettre en œuvre le traitement de contrôle ttc au moyen du procédé de traitement de contrôle PTCC, éventuellement tel qu'illustré par la figure 1.

En particulier, le procédé d'installation de terminaux associés PITx mis en œuvre par le dispositif de gestion DG4 comporte une réception Atx_RCV de terminaux associés atx en provenance du deuxième terminal T2 préalablement à l'enregistrement des terminaux associés Atx_RG.

Les terminaux associées atx sont notamment enregistrés Atx_RG par le dispositif de gestion DG4 dans une base de terminaux associés SDB, voire une base de souscripteurs au service fourni par le dispositif de gestion DG4. Le dispositif de gestion DG4 fournit un service d'utilisation de code de commande à distance ou service d'utilisation de code de commande par un terminal distinct du lecteur de code de commande, notamment en mettant en œuvre un procédé de gestion de codes de commande PGCC, par exemple tel que le procédé de gestion illustré par la figure 1.

En particulier, l'émission TTLCC_NTF du signal d'installation ttlc_ntf par le dispositif de gestion DG4 est effectuée à destination d'un premier terminal T1 parmi les terminaux associés atx reçus du deuxième terminal T2 par le dispositif de gestion DG4.

Notamment, le procédé d'installation de terminaux associés PITx comporte une extraction XTR d'un premier terminal T1 dans les terminaux associés atx reçus du deuxième terminal T2. Le cas échant, l'extraction XTR extrait l'identifiant du premier terminal id_{T1}. Ainsi, le chargement du traitement de lecture distant TTLCC_EM, voire le cas échéant l'émission du signal d'installation TTLCC_NTF, est effectué à destination du premier terminal T1 extrait XTR des terminaux associés atx reçus du deuxième terminal T2.

En particulier, un procédé d'installation d'une interface de lecture distant PILD est mis en œuvre par un premier terminal.

En particulier, le procédé d'installation d'une interface de lecture distant PILD mis en œuvre par le premier terminal comporte une réception NTF_RCV (non illustrée) d'un signal d'installation ttlcc_ntf provenant d'un dispositif de gestion DG4. La réception NTF_RCV du signal d'installation déclenche, éventuellement à condition d'une validation par l'utilisateur U du premier terminal, une émission REQ_EM (non illustré) d'une requête ou d'un accord de chargement dwld_rq(ttlcc).

Le procédé d'installation d'une interface de lecture distant PILD comporte une réception TTLCC_RCV d'un traitement de lecture distant de code de commande ttlcc provenant du dispositif de gestion DG4. La réception TTLCC_RCV du traitement de lecture distant résulte notamment d'une réception RQ_RCV₁, par le procédé d'installation de terminaux associés PITx, d'une requête de chargement du traitement de lecture distant dwld_rq(ttlcc) provenant du premier terminal.

Le procédé d'installation d'une interface de lecture distant PILD comporte, suite à la réception TTLCC_RCV d'un traitement de lecture distant de code de commande, l'installation TTLCC_ST du traitement de lecture distant ttlcc permettant ensuite au premier terminal de mettre en œuvre le traitement de lecture distant ttlcc au moyen du procédé de lecture LCC, éventuellement tel qu'illustré par la figure 1.

En particulier, le procédé de gestion de code de commandes PGCC comporte le procédé d'installation de terminaux associés PITx.

Dans un mode de réalisation particulier, un ou plusieurs des procédés selon l'invention sont mis en œuvre sous la forme d'un ou plusieurs programmes comprenant des instructions de code de programme pour l'exécution des étapes du procédé de gestion de codes de commande, et/ou du procédé de contrôle, et/ou du procédé de lecture de codes de commande, et/ou du procédé d'installation, et/ou du procédé d'association lorsque ledit programme est exécuté par un processeur.

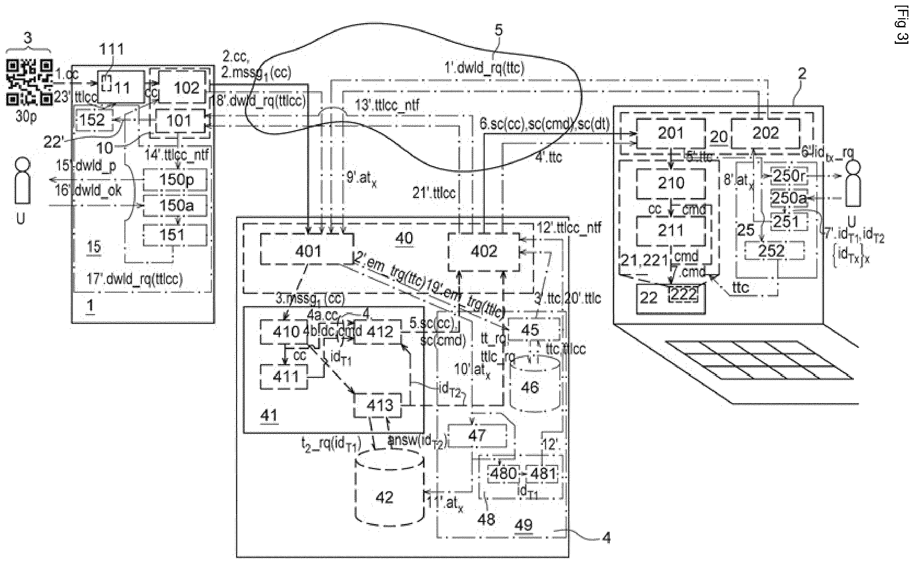

La figure 3 illustre un schéma simplifié d'une architecture de communication comportant le premier terminal, le dispositif de gestion de codes de commande et le deuxième terminal selon l'invention.

Le dispositif de gestion de codes de commande 4 comporte un émetteur 40, 402 d'un signal de commande sc à destination d'un deuxième terminal 2. Le signal de commande sc est fonction d'un code de commande cc reçu d'un premier terminal 1. Le code de commande cc est préalablement reçu par le premier terminal 1. Le premier terminal 1 et le deuxième terminal 2 sont associés préalablement à une réception d'un code de commande cc par le premier terminal 1.

En particulier, le dispositif de gestion de codes de commande 4 comporte :
- un chargeur 45 de traitements apte à charger un traitement de contrôle ttc à destination d'un deuxième terminal 2 et un traitement de lecture distant ttlcc à destination du premier terminal 1 ; et
- un enregistreur 47 de terminaux associés atx comportant le premier terminal 1 et le deuxième terminal 2, les terminaux associés atx étant reçus du deuxième terminal 2, l'enregistrement étant effectué préalablement à une réception de codes de commande cc par le premier terminal 1.

En particulier, l'émetteur 402 du dispositif de gestion 4 est apte à émettre outre le signal de commande sc à destination d'un deuxième terminal 2, le traitement de contrôle ttc à destination du deuxième terminal 2 mais aussi un traitement de lecture distant ttlcc à destination du premier terminal 1, voire éventuellement un signal d'installation ttlcc_ntf à destination du premier terminal 1.

En particulier, le dispositif de gestion 4 comporte un récepteur 401. Le récepteur 401 est apte à recevoir, par exemple, une requête de chargement d'un traitement de contrôle dwld_rq(ttc) provenant du deuxième terminal 2, et/ou les terminaux associés atx provenant du deuxième terminal 2, et/ou une requête de chargement d'un traitement de lecture distant dwld_rq(ttlcc) provenant du premier terminal 1, et/ou un code de commande cc, notamment inclus dans un premier message mssg1(cc), provenant du premier terminal 1.

Notamment, le dispositif de gestion 4 comporte un transmetteur 40 comportant l'émetteur 402 et le récepteur 401.

En particulier, le dispositif de gestion 4 comporte une base de traitements 46 dans laquelle le chargeur 45 récupère les traitements ttc, ttlcc à émettre vers respectivement le deuxième terminal 2 ou le premier terminal 1.

En particulier, le chargeur 45 est commandé directement ou indirectement par une requête de chargement dwld_rq, notamment une requête de chargement respectivement du traitement de contrôle dwld_rq(ttc) ou du traitement de lecture distant dwld_rq(ttlcc) provenant respectivement du deuxième terminal 2 ou du premier terminal 1. Eventuellement, le récepteur 401 recevant la requête de chargement dwld_rq commande le chargeur 45 notamment au moyen d'un signal de déclenchement em_trg pour récupérer les traitements ttc, ttlcc.

En particulier, le récepteur 401 transmet les terminaux associés atx reçus du deuxième terminal 2 à l'enregistreur 47.

En particulier, le dispositif de gestion 4 comporte une base de terminaux associés 42 dans laquelle le dispositif de gestion 4 voire l'enregistreur 47 enregistre, stcoke les terminaux associés atx reçus du deuxième terminal 2.

En particulier, le dispositif de gestion 4 comporte un fournisseur 481 de signal d'installation de lecteur de codes de commande. Le fournisseur de signal d'installation 481 transmet à l'émetteur 402 un signal d'installation du lecteur à destination du premier terminal 1 parmi les terminaux associés atx. Eventuellement, le dispositif de gestion 4 comporte un extracteur 480 apte à extraire des terminaux associés atx reçus le premier terminal 1, notamment un identifiant du premier terminal id_{T1}.

En particulier, le dispositif de gestion 4 comporte un déclencheur 48 d'installation du lecteur de codes de commande. Le déclencheur 48 transmet à l'émetteur 402 un signal d'installation du lecteur à destination du premier terminal 1 parmi les terminaux associés atx déclenchant l'envoi par l'émetteur 102 du premier terminal 1 d'une requête de chargement du traitement de lecture distant dwld_rq(ttlcc) à destination du dispositif de gestion 4. Le déclencheur 48 comporte notamment le fournisseur 481 et/ou l'extracteur 480.

En particulier, le dispositif de gestion 4 comporte un installateur de terminaux associés 49. L'installateur de terminaux associées 49 comporte notamment un ou plusieurs des dispositifs suivants :
- le chargeur 45,
- la base de traitements 46,
- l'enregistreur 47,
- la base de terminaux associés 42,
- le déclencheur 48,
- l'extracteur 480,
- le fournisseur 481.

En particulier, le dispositif de gestion 4 comporte un gestionnaire de code de commandes 41 apte à déclencher l'émission d'un signal de commande sc à destination du deuxième terminal, notamment au moyen de l'émetteur 402 et/ou du transmetteur 40, en fonction du code de commande cc reçu du premier terminal 1 au moyen du récepteur 401 et/ ou du transmetteur 40.

En particulier, le dispositif de gestion 4 comporte un extracteur de code de commande 410 apte à extraire d'un premier message mssg1 reçu du premier terminal 1 un code de commande cc. Notamment, l'extracteur de code de commande 410 reçoit le premier message mssg1(cc) comportant du code de commande du récepteur 401 ou du transmetteur 40 ayant reçu le premier message mssg1(cc).

En particulier, le dispositif de gestion 4 comporte un décodeur 411 de code de commande cc apte à décoder le code de commande reçu par le dispositif de gestion 4, notamment au moyen du récepteur 401 et/ou du transmetteur 40, voire extrait d'un premier message reçu mssg1 notamment par l'extracteur de code de commande 410. Le décodeur 411 détermine des données techniques dt, voire une commande cmd, en fonction du code de commande cc reçu par le dispositif de gestion 4.

En particulier, le dispositif de gestion 4 comporte un générateur 412 de signal de commande sc en fonction du code de commande cc reçu par le dispositif de gestion 4, notamment au moyen du récepteur 401 et/ou du transmetteur 40, voire extrait d'un premier message reçu mssg1 notamment par l'extracteur de code de commande 410. Le signal de commande sc comporte notamment le code de commande cc reçu : sc(cc), voire les données techniques dt ou commande cmd décodés par le décodeur 411 du code de commande cc reçu : sc(dt), sc(cmd). Le générateur 412 fournit le signal de commande sc à l'émetteur 402 et/ou au transmetteur 40 à destination du deuxième terminal 2 associé au premier terminal 1 ayant transmis le code de commande cc au dispositif de gestion 4.

En particulier, le dispositif de gestion 4 comporte un moteur de recherche de terminaux associés 413 apte à rechercher le deuxième terminal 2 associé au premier terminal 1 ayant transmis le code de commande cc au dispositif de gestion 4, notamment dans la base de terminaux associés 42. Ainsi, le dispositif de gestion émet le signal de commande sc à destination du deuxième terminal 2 déterminé, par le moteur de recherche 413, comme associé au premier terminal 1 ayant émis le code de commande cc reçu par le dispositif de gestion 4. Notamment, le moteur de recherche 413 fournit à l'émetteur 402, 40 du signal de commande sc ou au générateur de signal de commande 412 le deuxième terminal déterminé, par exemple sous la forme d'un identifiant du deuxième terminal id_{T2} ou une adresse du deuxième terminal...

En particulier, le dispositif de gestion 4 comporte un gestionnaire de codes de commande 41. Le gestionnaire de codes de commande comporte notamment un ou plusieurs des dispositifs suivants :
- l'extracteur de codes de commande 410,
- le décodeur de codes de commande 411,
- le générateur de signal de commande 412,
- le moteur de recherche de terminaux associés 413,
- la base de terminaux associés 42.

Le deuxième terminal 2 comporte un récepteur 201 d'un signal de commande sc provenant d'un dispositif de gestion de codes de commande 4. Le signal de commande sc est fonction d'un code de commande cc reçu par le dispositif de gestion de codes de commande 4 d'un premier terminal 1. Le code de commande cc est préalablement reçu par le premier terminal 1. Le premier terminal 1 et le deuxième terminal 2 sont associés préalablement à une réception d'un code de commande cc par le premier terminal 1.

En particulier, le deuxième terminal 2 comporte un coupleur 251 apte à associer un premier terminal 1 et un deuxième 2 formant des terminaux associés atx et à émettre les terminaux associés atx à destination d'un dispositif de gestion de codes de commande 4 préalablement à une réception d'un code de commande cc par le premier terminal 1.

En particulier, le récepteur 201 est apte à recevoir outre le signal de commande cc provenant du dispositif de gestion 4, le traitement de contrôle ttc provenant du dispositif de gestion 4.

En particulier, le deuxième terminal comporte un émetteur 202. L'émetteur 202 est apte à émettre, par exemple, une requête de chargement d'un traitement de contrôle dwld_rq(ttc) à destination du dispositif de gestion 4, et/ou les terminaux associés atx à destination du dispositif de gestion 4.

Notamment, le deuxième terminal 2 comporte un transmetteur 20 comportant l'émetteur 202 et le récepteur 201.

En particulier, le deuxième terminal 2 comporte un installateur 252 du traitement de contrôle reçu ttc permettant ensuite au deuxième terminal 2 de mettre en oeuvre le traitement de contrôle ttc au moyen d'un processeur de traitement 21, 221.

En particulier, le deuxième terminal comporte une interface d'entrée utilisateur 250a apte à recevoir une interaction d'un utilisateur U comportant des données relatives à au moins un premier terminal, notamment des identifiants ou adresse de terminaux idT1, {idTx}ₓ, à associer au deuxième terminal 2, voire à un ou plusieurs deuxièmes terminaux supplémentaires à associer au premier terminal et au deuxième terminal mettant en œuvre un coupleur 251.

Notamment, le deuxième terminal 2 comporte une interface de sortie utilisateur 250r apte à reproduire une requête de fourniture de terminaux à associer id_{tx_}rq à destination d'un utilisateur U du deuxième terminal 2. L'interface d'entrée utilisateur 250a est déclenchée par l'interface de sortie utilisateur 250r reproduisant une requête de fourniture de terminaux à associer à laquelle l'utilisateur U répond lors de son interaction au moyen de l'interface de sortie utilisateur 250r du deuxième terminal 2.

En particulier, le deuxième terminal 2 comporte une interface d'installation 25 d'une utilisation de code de commande à distance apte à installer la mise en œuvre par un processeur de traitement 21, 221 d'un traitement de contrôle du deuxième terminal 2 au moyen d'un code de commande cc lu par un terminal, nommé premier terminal 1, distinct du deuxième terminal 2 et à associer le deuxième terminal 2 à un premier terminal 1. L'interface d'installation 25 comporte notamment un ou plusieurs des dispositifs suivants :
- l'interface d'entrée utilisateur 250r ;
- l'interface de sortie utilisateur 250a ;
- le coupleur 251 de terminaux fournissant les terminaux associés atx;
- l'installateur 252 du traitement de contrôle reçu ttc.

L'interface d'installation 25 d'utilisation de code de commande à distance communique au moyen de l'émetteur 202 et/ou du récepteur 201 et/ou du transmetteur 20 avec le dispositif de gestion 4 de codes de commande, notamment pour émettre les terminaux associés atx, en particulier les identifiants des terminaux associés atx=([idTx}), atx=(id_{T1},id_{T2}), et recevoir le traitement de contrôle ttc.

En particulier, le deuxième terminal 2 comporte un extracteur 210 du contenu du signal de commande sc reçu du dispositif de gestion 4, notamment du code de commande cc, de données techniques dt, de commande cmd.

En particulier, le deuxième terminal 2 comporte un décodeur 211 de code de commande cc. Le signal de commande reçu sc comporte le code de commande cc préalablement transmis par le premier terminal 1 au dispositif de gestion de codes de commande 4. Le décodeur de code de commande 211 par le deuxième terminal 2 fournit, notamment, la ou les données techniques dt codé dans le code de commande cc, notamment une commande cmd. Le décodeur 211 est mis en oeuvre lorsque le signal de commande sc reçu par le deuxième terminal 2 associé au premier terminal 1 ayant reçu (capté, lu) le code de commande cc stocké, reproduit, affiché comporte le code de commande cc : sc(cc). En particulier, le décodeur 211 comporte un récupérateur (non illustré) d'une commande cmd en fonction du code de commande cc ou des données techniques dt incluses dans le code de commande dans une base de commande (non illustrée).

En particulier, le deuxième terminal 2 comporte un générateur 212 (non illustré) de commande cmd en fonction des données techniques. Le générateur 212 de commande est mis en oeuvre lorsque le signal de commande sc reçu par le deuxième terminal 2 associé au premier terminal 1 ayant reçu (capté, lu) le code de commande cc stocké, reproduit, affiché comporte des données techniques tels qu'une adresse Internet, un identifiant de connexion, etc., : sc(dt). Notamment, en fonction du type de données techniques est, éventuellement, déterminé le traitement mis en œuvre par le deuxième terminal 2 et/ou le composant du deuxième terminal 2 à commander en utilisant les données techniques dt puis, le cas échéant, généré une commande cmd fonction des données techniques dt et/ou du traitement ou composant à commander.

En particulier, le deuxième terminal 2 comporte un contrôleur 21, 221 apte à contrôler le deuxième terminal 2, notamment à contrôler un traitement ou un composant 22 du deuxième terminal 2, en fonction du signal de commande reçu sc. Le contrôleur 21, 221 du deuxième terminal 2 comporte, par exemple, un ou plusieurs des dispositifs suivants :
- l'extracteur 210 de contenu du signal de commande ;
- le décodeur 211 de code de commande ;
- le générateur 212 de commande.

Le premier terminal 1 comporte :
- un lecteur 11 de codes de commande cc apte à recevoir un code de commande lu, et
- un émetteur 10, 102 de codes de commande cc à destination d'un dispositif de gestion de codes de commande 4,

le lecteur 11 de codes de commande commandant l'émetteur 10, 102 de codes de commande lors d'une réception d'un code de commandes,
le code de commande cc émis par le premier terminal 1 déclenchant une émission, par le dispositif de gestion de codes de commande 4, d'un signal de commande sc à destination d'un deuxième terminal 2, le deuxième terminal 2 ayant été associé au premier terminal 1 préalablement à une réception du code de commande cc par le premier terminal 1.

Eventuellement, l'émetteur 10,102 envoie au dispositif de gestion 4 un code de commande dans un premier message mssg1(cc). En particulier, l'émetteur 10,102 est aussi apte à émettre une requête de chargement d'un traitement de lecture distant dwld_rq(ttlcc).

En particulier, le premier terminal 1 comporte un récepteur 10,101 apte à recevoir des données du dispositif de gestion 4, notamment un traitement de lecture distant de codes de commande ttlcc et, éventuellement un signal d'installation du traitement de lecture distant ttlcc_ntf.

En particulier, le récepteur 10, 101 reçoit le traitement de lecture distant ttlcc du dispositif de gestion 4 suite à une émission par l'émetteur 10, 102 d'une requête de chargement du traitement de lecture distant dwld_rq(ttlcc) à destination du dispositif de gestion 4.

Le cas échéant, lorsque le récepteur 10, 101 reçoit un signal d'installation ttlcc_ntf provenant du dispositif de gestion 4, la réception du signal d'installation déclenche, éventuellement à condition d'une validation par l'utilisateur U du premier terminal, un envoi par l'émetteur 10, 102 d'une requête ou d'un accord de chargement dwld_rq(ttlcc).

Notamment, le premier terminal 1 comporte un transmetteur 10 comportant l'émetteur 102 et le récepteur 101.

En particulier, le premier terminal 1 comporte une interface d'entrée utilisateur 150a apte à recevoir une interaction d'un utilisateur U comportant des données relatives au traitement de lecture, notamment un accord de chargement dwld_ok d'un traitement de lecture distant ttlcc.

Notamment, le premier terminal 1 comporte une interface de sortie utilisateur 150p apte à reproduire une proposition de chargement d'un traitement de lecture distant de codes de commande dwld_p à destination d'un utilisateur U du premier terminal 1. L'interface d'entrée utilisateur 150a est déclenchée par l'interface de sortie utilisateur 150p reproduisant une proposition de chargement dwld_p à laquelle l'utilisateur U répond lors de son interaction au moyen de l'interface de sortie utilisateur 150a du premier terminal 1.

En particulier, le premier terminal 1 comporte un générateur de requête de chargement 151 apte à générer une requête de chargement du traitement de lecture distant dwld_rq(ttlcc). Notamment, Le générateur de requête de chargement 151 génère et fournit une requête de chargement dwld_rq(ttlcc) à l'émetteur 10, 102, par exemple, sur commande de l'interface d'entrée utilisateur 150a en fonction de l'interaction de l'utilisateur U, tel qu'un accord dwld_ok.

En particulier, le premier terminal 1 comporte un installateur 152 de traitement apte à installer un traitement de lecture distant ttlcc reçu du dispositif de gestion 4. L'installateur de traitement 152 permet, en installant le traitement de lecture distant ttlcc, au premier terminal de mettre en oeuvre le traitement de lecture distant ttlcc , notamment au moyen du lecteur 11 de codes de commande.

En particulier, le premier terminal comporte une interface d'installation 15 d'une lecture distante de code de commande apte à installer la mise en oeuvre par lecteur 11 d'un traitement de lecture distant d'un code de commande par le premier terminal 1 destiné à être utilisé par un deuxième terminal 2, associé au premier terminal 1, le premier terminal et le deuxième terminal étant des terminaux associés distincts. L'interface d'installation 15 comporte notamment un ou plusieurs des dispositifs suivants :
- l'interface d'entrée utilisateur 150p ;
- l'interface de sortie utilisateur 150a ;
- le générateur de requête de chargement 151 ;
- l'installateur 152 du traitement de lecture distant reçu ttlcc.

L'interface d'installation 15 de lecture de code de commande à distance communique au moyen de du récepteur 101 et/ou l'émetteur 102 et/ou du transmetteur 10 avec le dispositif de gestion 4 de codes de commande, notamment pour recevoir le traitement de lecture distant ttlcc et émettre le code de commande cc.

En particulier, le premier terminal 1 comporte un récepteur 111 d'un code de commande apte à recevoir un code de commande cc en provenance d'un objet 3.

Dans un premier mode de réalisation, le code de commande cc est notamment inclus dans un pictogramme 30p à N dimensions reproduit sur un troisième objet 3 tel qu'un document (affiche; étiquette apposée sur un objet tel qu'un dispositif électronique, un emballage de produit... ; un ouvrage relié : livre, journal, magazine... ; etc.) ou sur un écran notamment d'un troisième objet consistant en un dispositif électronique, aussi nommé troisième terminal, tel qu'un dispositif de communication : smartphone, télévision, etc. ou un simple dispositif électronique d'affichage : moniteur, écran publicitaire... Le code de commande cc est alors une représentation graphique d'une donnée technique.

Dans ce premier mode de réalisation, un lecteur du code de commande 11 est un capteur du code de commande 11 du premier terminal T1. Le capteur du code de commande 11 comporte le récepteur du code de commande 111. Le capteur 11 est notamment un scanneur, une caméra photographique ou vidéo, etc. du pictogramme 30p. Le récepteur du code de commande 111 est alors respectivement un récepteur d'un document résultant du scan du pictogramme 30p, d'une image résultant de la capture photographique ou vidéo du pictogramme 30p, etc. contenant le code de cc commande inclus dans le pictogramme.

Dans un deuxième mode de réalisation, le code de commande cc est, par exemple, stocké dans une mémoire d'un dispositif de communication à courte portée 30r (illustré par la figure 1), aussi nommé troisième terminal 3. Par communications à courte portée sont entendues les communications point à point en champ proche généralement de l'ordre du cm, tel que celles utilisées par les technologies RFID, NFC, etc.

Le code de commande cc stocké dans le dispositif de communication à courte portée 3 est notamment un code graphique, tel qu'un pictogramme à N dimensions.

Dans ce deuxième mode de réalisation, le lecteur de codes de commande 11 est un lecteur de données dans une mémoire d'un dispositif de communication à courte portée, aussi nommé troisième terminal 3 (par exemple une carte/étiquette RFID ou NFC, un smartphone équipé d'une interface de communication à courte portée, etc.) auquel le premier terminal 1 est connecté par un réseau de communication à courte portée 6. Le lecteur du code de commande 11 comporte le récepteur 111 du code de commande cc. Le récepteur 111 du code de commande est alors un récepteur 111 du code de commande stocké dans la mémoire 30r du troisième terminal 3. En particulier, le lecteur de codes de commande 11 comporte un émetteur 112 (non illustré) à destination du troisième terminal 3 d'une requête de lecture rd_rq (non illustré) du code de commande cc stocké. La requête de lecture rd_rq est une requête apte à déclencher un envoi par un émetteur 302 (non illustrée) par le troisième terminal 3 du code de commande cc stocké dans sa mémoire 30r, en particulier à destination du premier terminal 1.

Ainsi, le code de commande reçu cc par le premier terminal 1 est émis par l'émetteur 10, 102 à destination du dispositif de gestion de codes de commande 4, notamment sous la forme d'un premier message comportant le code de commande msgg₁(cc) déclenché par la fourniture à l'émetteur 10, 102 par le lecteur de code de commande 11 du code de commande cc reçu par le lecteur de code de commande 11 de l'objet 3.

Le dispositif de gestion 4 communique avec le premier terminal 1 via un réseau de communication. Le dispositif de gestion 4 communique avec le deuxième terminal 2 via un réseau de communication. En particulier, le réseau de communication entre le dispositif de gestion 4 et le premier terminal 1 est le même réseau que celui utilisé entre le dispositif de gestion 4 et le deuxième terminal 2 : le réseau de communication 5.

Dans une première phase dite d'association de terminaux pour une lecture distante d'une utilisation de codes de commande, par exemple, le deuxième terminal 2 requiert un chargement d'un traitement de contrôle 1'.dwld_rq(ttc) à destination du dispositif de gestion 4 notamment au moyen d'un émetteur 20, 202. Dans ce cas, le dispositif de gestion 4 reçoit la requête de chargement d'un traitement de contrôle 1'.dwld_rq(ttc) du deuxième terminal 2 notamment au moyen d'un récepteur 40, 401. En particulier, la réception de la requête de chargement d'un traitement de contrôle 1'.dwld_rq(ttc) par le deuxième terminal 2, notamment le récepteur 20, 201, déclenche 2'.em_trg(ttc) une émission, un chargement du traitement de contrôle par le dispositif de gestion 4 à destination du deuxième terminal 2 requérant, en déclenchant par exemple un chargeur 45 et/ou un émetteur 40, 402. Ainsi, le chargeur 45 est commandé directement ou indirectement par la requête de chargement du traitement de contrôle 1'.dwld_rq(ttc) provenant du deuxième terminal 2.

Le chargeur 45 de traitements fournit 3'.ttc un traitement de contrôle à destination du deuxième terminal 2, notamment en le fournissant à l'émetteur 40, 402 qui l'envoie 4'.ttc à destination du deuxième terminal 2. En particulier, le chargeur 45 récupère dans la base de traitements 46 le traitement ttc, à charger sur le deuxième terminal 2.

Le traitement de contrôle ttc requis permettra ultérieurement au deuxième terminal 2 de contrôler un traitement ou un composant du deuxième terminal en fonction d'un code de commande non pas lu/capté par le deuxième terminal 2 mais reçu par le deuxième terminal 2, le code de commande reçu par le deuxième terminal 2 ayant été préalablement reçu (lu/capté) à distance par un terminal distinct du deuxième terminal 2, aussi nommé premier terminal 1.

Le deuxième terminal 2 reçoit le traitement de contrôle 4'.ttc chargé par le dispositif de gestion 4, notamment au moyen du récepteur 20, 201. Le traitement de contrôle reçu ttc est installé, notamment par l'installateur 252, sur le deuxième terminal 2 pour être mis en oeuvre ultérieurement par le deuxième terminal 2, notamment par un processeur de traitement 21, 221.

Eventuellement, le récepteur 20, 201 lors de la réception du traitement de contrôle 5'.ttc déclenche une interface de sortie utilisateur 250 r qui reproduit à destination de l'utilisateur U une requête de terminaux à associer 6'.id_{Tx_}rq.

En particulier, le récepteur 20, 201 lors de la réception du traitement de contrôle 5'.ttc, voire l'interface de sortie utilisateur 250r lors de la reproduction de la requête de terminaux à associer déclenche une interface d'entrée utilisateur 250a qui reçoit de l'utilisateur U des données relatives à au moins un premier terminal, tel qu'un identifiant d'un premier terminal 7'.idT1, {idTx}ₓ.

En particulier, le récepteur 20, 201 lors de la réception du traitement de contrôle 5'.ttc, voire l'interface d'entrée utilisateur 250a de lors de la réception de données relatives à au moins un premier terminal, tel qu'un identifiant d'un premier terminal 7'.idT1, {idTx}ₓ, déclenche le coupleur 251 qui associe le deuxième terminal 2 à au moins le premier terminal 1, notamment indiqué par l'utilisateur U au moyen de l'interface d'entrée utilisateur 250a. Le coupleur 251 fournit alors les terminaux associés résultant 8'.atx de cette association du deuxième terminal à au moins le premier terminal 1 au dispositif de gestion 4 notamment au moyen de l'émetteur 20, 202 : 9'.atx.

Le dispositif de gestion 4 reçoit les terminaux associés 9'.atx notamment au moyen du récepteur 40, 401. En particulier, l'enregistreur 47 de terminaux associés atx comportant le premier terminal 1 et le deuxième terminal 2, reçoit les terminaux associés 1 0'.atx du deuxième terminal 2, notamment via le récepteur 40, 401.Eventuellement, le dispositif de gestion 4 voire l'enregistreur 47 enregistre, stocke 11'.atx les terminaux associés atx reçus du deuxième terminal 2, notamment dans la base de terminaux associés 42.

En particulier, le dispositif de gestion 4 comporte un notificateur 48 de mise à disposition d'un traitement de lecture ttlcc à destination d'un premier terminal 1 dans les terminaux associés 10'.atx, 11'.atx reçus du deuxième terminal 2. Notamment, le notificateur 48 fournit un signal d'installation 12'.ttlcc_ntf d'un traitement de lecture à destination du premier terminal 1. Eventuellement, le notificateur 480 fournit le signal d'installation 12'.ttlcc_ntf à un émetteur 40, 402 envoyant le signal d'installation 13'.ttlcc_ntf au premier terminal 1.

Notamment, le dispositif de gestion 4 comporte un extracteur 480 d'un premier terminal 1 dans les terminaux associés 10'.atx, 11'.atx reçus du deuxième terminal 2. Le cas échant, l'extracteur 480 extrait l'identifiant du premier terminal id_{T1}. Ainsi, le chargeur 45 fournit un traitement de lecture distant, voire le cas échéant le notificateur 48 et/ou un générateur de signal d'installation 481 fournit un signal d'installation à destination du premier terminal 1 extrait des terminaux associés atx reçus du deuxième terminal 2.

En particulier, le dispositif de gestion 4 comporte un générateur 481 d'un signal d'installation ttlc_ntf. Le générateur 481 fournit le signal d'installation 12'.ttlcc_ntf à l'émetteur 40, 402 à destination du premier terminal 1 des terminaux associés atx. Le signal d'installation ttlcc_ntf permet un chargement d'un traitement de lecture ttlcc par le dispositif de gestion de codes de commande 4, en particulier par le chargeur 45, à destination du premier terminal 1.

En particulier, le notificateur 48 comporte l'extracteur 480 et/ou le générateur de signal d'installation 481.

En particulier, le premier terminal 1, notamment le récepteur 10, 101, reçoit le signal d'installation 13'.ttlcc_ntf provenant du dispositif de gestion 4, notamment directement ou indirectement du notificateur 48 et/ou du générateur de signal d'installation 481. Lors de la réception du signal d'installation 13'.ttlcc_ntf, le récepteur 10, 101 déclenche, éventuellement à condition d'une validation par l'utilisateur U du premier terminal, un envoi par l'émetteur 10, 102 d'une requête ou d'un accord de chargement 18'.dwld_rq(ttlcc).

Eventuellement, le récepteur 10, 101 lors de la réception du signal d'installation 13".ttlcc_ntf déclenche une interface de sortie utilisateur 150p qui reproduit à destination de l'utilisateur U une proposition d'installation d'un traitement de lecture 15'.dwld_p.

En particulier, le récepteur 10, 101 lors de la réception du signal d'installation 13".ttlcc_ntf, voire l'interface de sortie utilisateur 150p lors de la reproduction proposition d'installation déclenche une interface d'entrée utilisateur 150a qui reçoit de l'utilisateur U des données relatives au chargement du traitement de lecture, notamment un accord de chargement 16'.dwld_ok.

En particulier, le récepteur 10, 101 lors de la réception du signal d'installation 13".ttlcc_ntf, voire l'interface d'entrée utilisateur 150a de lors de la réception de données relatives au chargement du traitement de lecture, notamment un accord de chargement 16'.dwld_ok, déclenche le requêteur 151 qui requiert 17'.dwld_rq(ttlcc) au dispositif de gestion 4 le chargement du traitement de lecture sur le premier terminal 1. Le requêteur 151 fournit alors la requête résultant 17'.dwld_rq(ttlcc) de la réponse de l'utilisateur 16'.dwld_ok, en l'occurrence une requête de chargement lorsque la réponse est un accord de chargement à destination du dispositif de gestion 4, notamment à l'émetteur 10, 102 qui envoie la requête fournie 18'.dwld_rq(ttlcc) au dispositif de gestion 4.

Notamment, suite à l'émission d'un signal d'installation 13'.ttlc_ntf par le dispositif de gestion 4, en particulier par l'émetteur 40, 402, éventuellement préalablement généré par le générateur de signal d'installation 481, le dispositif de gestion 4, en particulier le récepteur 40, 401, reçoit la requête de chargement de traitement de lecture distant 18'.dwld_rq(ttlcc) provenant du premier terminal 1.

Le dispositif de gestion 4, notamment le récepteur 40, 401, déclenche le chargement du traitement de lecture ttlcc, notamment le chargeur 45 qui charge alors le traitement de lecture ttlcc, à destination du premier terminal 1 associé au deuxième terminal dans les terminaux associés reçus 10'.atx, en particulier lors de la réception de la requête de chargement de traitement de lecture distant 18'.dwld_rq(ttlcc) provenant du premier terminal 1. Eventuellement, le chargeur 45 fournit le traitement de lecture 20'.ttlcc à l'émetteur 40, 402 qui envoie le traitement de lecture 21'.ttlcc au premier terminal 1.

Le premier terminal 1 reçoit le traitement de lecture 21'.ttlcc chargé par le dispositif de gestion 4, notamment au moyen du récepteur 10, 101. Le traitement de lecture reçu ttlcc est installé, notamment par l'installateur 152, sur le premier terminal 1 pour être mis en oeuvre ultérieurement par le premier terminal 1, notamment par un lecteur 11.

Dans une deuxième phase dite d'utilisation de codes de commande, par exemple, le premier terminal 1, en particulier un lecteur 11 mettant notamment en oeuvre un traitement de lecture installé dans la phase précédente d'association, lit 1.cc un code de commande 30p d'un objet 3. En particulier, le lecteur 11 fournit le code de commande lu 2.cc, 2.mssg1(cc) à destination du dispositif de gestion 4, notamment dans un premier message 2.mssg1(cc).L'émetteur 10, 102 envoie 2.cc, 2.mssg1(cc) le code de commande cc lu provenant du lecteur 11 à destination du dispositif de gestion 4.

Le dispositif de gestion 4, en particulier le récepteur 40, 401, recevant le code de commande 2.cc, 2.mssg1(cc) provenant du premier terminal 1, le dispositif de gestion 4, en particulier le gestionnaire de code de commande 41 et/ou le moteur de recherche de terminaux associés 413 détermine le deuxième terminal 2 en fonction du premier terminal 1 ayant émis le code de commande, notamment dans la base de terminaux associés 42. Alors, le dispositif de gestion 4, en particulier l'émetteur 40, 402, émet un signal de commande 6.sc(cc), sc(cmd), sc(dt) fonction du code de commande reçu à destination du deuxième terminal 2 ainsi déterminé.

En particulier, l'extracteur de code de commande 410 extrait du premier message 2.mssg1(cc) reçu du premier terminal 1 un code de commande cc. Notamment, l'extracteur de code de commande 410 reçoit le premier message 3.mssg1(cc) comportant le code de commande du récepteur 401 ou du transmetteur 40 ayant reçu le premier message 2.mssg1(cc).

En particulier, le décodeur 411 de code de commande décode le code de commande reçu 2.cc, par le dispositif de gestion 4, notamment au moyen du récepteur 401 et/ou du transmetteur 40, voire extrait 4a.cc d'un premier message reçu 3.mssg1(cc) notamment par l'extracteur de code de commande 410. Le décodeur 411 détermine des données techniques 4b.dt, voire une commande 4b.cmd, en fonction du code de commande 2.cc, 2.mssg1(cc) reçu par le dispositif de gestion 4.

En particulier, le générateur 412 de signal de commande sc en fonction du code de commande 2.cc, 2.mssg1(cc) reçu par le dispositif de gestion 4, notamment au moyen du récepteur 401 et/ou du transmetteur 40, voire extrait 4a.cc d'un premier message reçu 3.mssg1(cc) notamment par l'extracteur de code de commande 410. Le signal de commande sc comporte notamment le code de commande cc reçu : 5.sc(cc), voire les données techniques dt ou commande cmd décodés par le décodeur 411 du code de commande cc reçu : 5.sc(dt), sc(cmd). Le générateur 412 fournit le signal de commande 5.sc à l'émetteur 402 et/ou au transmetteur 40 à destination du deuxième terminal 2 associé au premier terminal 1 ayant transmis le code de commande cc au dispositif de gestion 4.

Ainsi, le dispositif de gestion 4 transmet au deuxième terminal 2 un signal de commande 6.sc(cc), sc(cmd),sc(dt) fonction du code de commande lu envoyé 2.cc2.mssg1(cc) par le premier terminal 1 au dispositif de gestion 4, le deuxième terminal 2 et le premier terminal 1 ayant préalablement été associés : atx.

En particulier, l'extracteur 210 extrait le contenu du signal de commande 6.sc reçu du dispositif de gestion 4, notamment un code de commande cc, des données techniques dt, une commande cmd. Le signal de commande reçu 6.sc par le deuxième terminal 2 est notamment reçu par le récepteur 20, 21 est fourni à l'extracteur 210.

En particulier, le décodeur 211 de code de commande cc décode soit le code de commande du signal de commande reçu 6.sc(cc), soit le code de commande extrait cc par l'extracteur 210 du 6.sc terminal 2 du signal de commande reçu sc. Le décodeur 211 fournit alors soit des données techniques dt au générateur de commandes 212, le générateur de commandes 212 fournissant 7.cmd une commande générée en fonction des données techniques dt au contrôleur 21, 221, soit la commande 7.cmd au contrôleur 21, 221 pour commander le deuxième terminal 2, en particulier le composant 22, en fonction du code de commande cc lu par le premier terminal 1

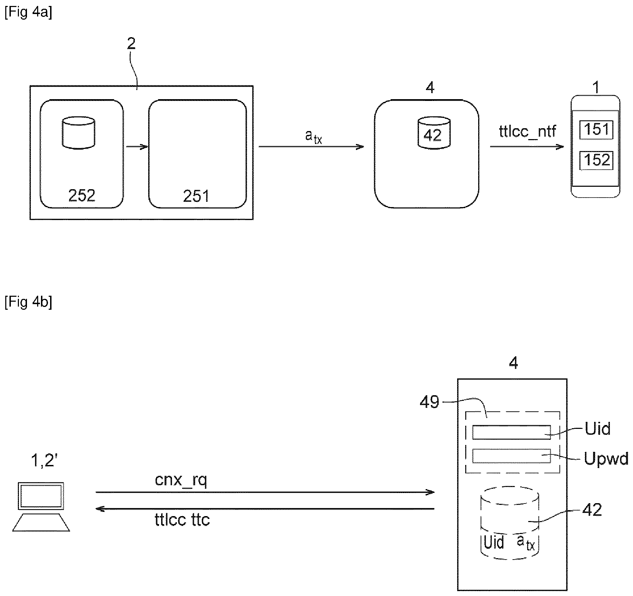

La figure 4a illustre un schéma simplifié d'enregistrement d'une association de terminaux préalable à l'utilisation de codes de commande selon l'invention.

Le deuxième terminal 2, en particulier, un installateur de traitement de contrôle 252 installe un traitement de contrôle ttc utilisant un code de commande, notamment d'un code 2D. En particulier, lors de l'installation du traitement de contrôle. Un mode de réalisation du traitement de contrôle est une application de contrôle mis en oeuvre par un processeur du deuxième terminal 2.L'application de contrôle lorsqu'elle est mise en oeuvre par le processeur du deuxième terminal 2 effectue les étapes du procédé de contrôle PCTx, notamment tel qu'illustrées par la figure 1.

En particulier, l'installateur 252 déclenche le coupleur 251 au moyen duquel le deuxième terminal fournit, lors de l'installation du traitement de contrôle, les terminaux associés atx. Le coupleur 251 reçoit le premier terminal 1 et au moins un deuxième terminal 2 notamment sous la forme de données relatives au deuxième terminal 2 dans lequel le coupleur 251 est implémenté: par exemple un identifiant du deuxième terminal 2 et/ou un identifiant du traitement/application du deuxième terminal id_{app_PC}, et de données relatives à des terminaux associés, notamment à un premier terminal 1, tel qu'un smartphone : numéro de téléphone du premier téléphone, voire à d'autres deuxièmes terminaux, tel qu'un smartphone : numéro de téléphone...un objet connecté : identifiant d'un premier objet connecté IoT1, d'un deuxième objet connecté IoT2...

La fourniture par le deuxième terminal 2 des terminaux associés atx est effectuée notamment sous la forme d'une requête d'installation des terminaux associés, en particulier une requête sécurisée telle que : https://[id-pc]/[id-msisdn]/[id-app-pc]/serveur-qr-code-pc.com dans laquelle id-pc est un identifiant du deuxième terminal 2, id-msisdn est un identifiant d'un premier terminal 1, id-app-pc est un identifiant du traitement de contrôle ou application de contrôle installée sur le deuxième terminal 2 et serveur-qr-code-pc.com indique requiert la mise en œuvre de l'association par le dispositif de gestion 4, notamment un serveur de fournitures de services, recevant les terminaux associés atx.

Suite à la réception des terminaux associés atx par le dispositif de gestion 4, le dispositif de gestion envoi au premier terminal 1 associé des terminaux associés atx un signal d'installation ttlcc_ntf, aussi nommée notification de téléchargement.

Ainsi, le premier terminal 1 des terminaux associés reçoit la notification de téléchargement. Cela déclenche, éventuellement suite à une validation par l'utilisateur, l'installation sur le premier terminal 1 d'un traitement de lecteur à distance notamment dans le lecteur 11 ou sous forme d'une application de lecture qui lorsqu'elle est exécutée par le lecteur 11 met en œuvre les étapes du procédé de lecture, par exemple tel qu'illustré par la figure 1.

Alors le lecteur 11 du premier terminal 1 mettant en oeuvre le traitement de lecture selon l'invention permet de scanner/capter/lire un code de commande qui sera utilisé non pas sur le premier terminal 1 mais sur le deuxième terminal 2.

La figure 4b illustre un schéma simplifié d'un ajout d'un deuxième terminal à un enregistrement d'une association de terminaux préalable à l'utilisation de codes de commande selon l'invention.

Le premier terminal 1 ou un autre deuxième terminal 2' se connecte au dispositif de gestion 4, en particulier à un compte utilisateur comportant des terminaux associés pour l'utilisation distante de code de commande. Eventuellement, la connexion au compte utilisateur est authentifiée, notamment par un dispositif d'authentification 49 recevant un identifiant d'utilisateur Uid et un mot de passe utilisateur Upwd.

Notamment, la connexion du premier terminal 1 ou autre deuxième terminal 2' est déclenchée par l'envoi de ce premier terminal 1, deuxième terminal 2' d'une requête de connexion cnx_rq. La requête de connexion cnx_rq comporte notamment un identifiant du terminal et/ou le traitement requis : sous forme par exemple de requête de chargement de traitement de lecture ou de requête de chargement de traitement de contrôle. La requête de connexion est notamment formulée comme suit : https:/app/plug-in/id/password/xxxxx.com. Dans cet exemple, le traitement est requis sous la forme d'un plug-in de navigateur c'est-à-dire que le traitement sera installé dans un navigateur Internet pour être mis en œuvre par le navigateur.

Si le dispositif d'authentification 49 détermine que le mot de passe utilisateur reçu Upwd dans la requête de connexion cnx_rq provenant du nouveau terminal 1, 2' correspond au mot de passe enregistré dans le compte utilisateur associé à l'identiant d'utilisateur Uid reçu, alors le dispositif de gestion, le cas échéant, ajoute le terminal requérant 1, 2' au terminaux associés atx du compte utilisateur Uid, puis charge le traitement approprié à savoir un traitement de lecture vers un premier terminal 1 ou un traitement de contrôle vers un deuxième terminal 2'.

Lors du chargement du traitement ttlcc, ttc du dispositif de gestion 4 au terminal 1 , 2', le chargement est notamment effectué sous la forme suivante : https://dowioad/app/!D_compte/xxxxxx.com. Notamment, le traitement chargé sur le terminal 1, 2' comporte un identifiant du compte utilisateur dans lequel le terminal 1, 2' est associé au deuxième terminal ayant servi à installer le compte utilisateur.

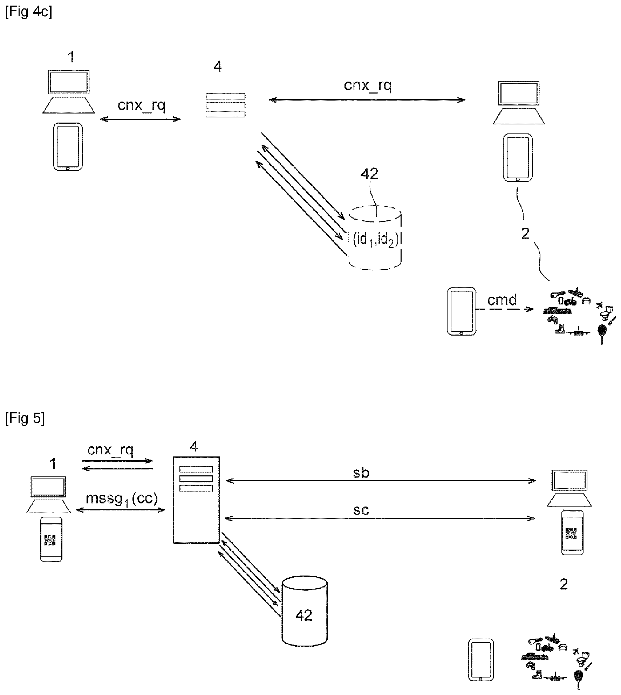

La figure 4c illustre un schéma simplifié d'une connexion de premier terminal et deuxième terminal à un dispositif de gestion de codes de commande préalable à l'utilisation de codes de commande selon l'invention.

En particulier, pour la mise en oeuvre de l'invention, les terminaux 1, 2 se connectent au dispositif de gestion ou serveur.

Par exemple, le premier terminal 1 se connecte au dispositif de gestion 4, tel qu'un serveur, notamment au moyen d'une requête de connexion, telle qu'un websocket du type mqtts:\\server1. Pour cela le premier terminal 1 s'identifie auprès du dispositif de gestion 4 au moyen d'un identifiant de premier terminal id_{T1}, tel qu'un identifiant et IMSI ou SIM d'un opérateur mobile, ou MSISDN de téléphonie ou par authentification au moyen d'un code notamment d'un code PIN ou d'un identifiant généré par le traitement de lecture mis en œuvre par le premier terminal 1 ou d'un alias éventuellement crypté...

Le traitement de lecture est mis en œuvre dans le premier terminal 1 notamment au moyen d'une application exécutée par un processeur du premier terminal 1 ou d'un plug-in installé dans un navigateur du premier terminal 1.

Notamment, le deuxième terminal 2 : ordinateur, smartphone ou objet connecté se connecte au dispositif de gestion au moyen d'une requête de connexion, telle qu'un websocket du type mqtts:\\. Pour cela le deuxième terminal 2 s'identifie auprès du dispositif de gestion 4 au moyen d'un identifiant de deuxième terminal id_{T2}, tel qu'un identifiant IMSI ou SIM d'un opérateur mobile, ou MSISDN de téléphonie ou par authentification au moyen d'un code notamment d'un code PIN ou d'un identifiant généré par le traitement de lecture mis en oeuvre par le premier terminal 1 ou d'un alias éventuellement crypté...

Le traitement de contrôle est mis en œuvre dans le deuxième terminal 2 notamment au moyen d'une application exécutée par un processeur du deuxième terminal 2 ou d'un plug-in installé dans un navigateur du deuxième terminal 2.

Les objets connectés 2 sont notamment des objets de l'Internet des objets sans interface utilisateur dont le pilotage est notamment effectué par un autre terminal, tel qu'un téléphone mobile, via un réseau local utilisant en particulier la technologie Bluetooth.

Le dispositif de gestion 4 connait les premiers et deuxièmes terminaux 1, 2 associés car il les a stockés notamment dans une base de terminaux associés 42, notamment en stockant des couples d'identifiants (id_{T1}, id_{T2}) de terminaux associés. Ainsi, lors de la connexion des premiers et deuxièmes terminaux 1,2 au dispositif de gestion 4, les premiers et deuxièmes terminaux 1,2 sont appairés via le dispositif de gestion.

La connexion du premier terminal préalablement à la transmission d'un code de commande reçu par le premier terminal 1, permet si le deuxième terminal n'est pas connecté au dispositif de gestion 4 lors de la transmission du code de commande du premier terminal 1 au dispositif de gestion de déclencher un stockage du code de commande fournit par le premier terminal 1 au dispositif de gestion 4 dans le compte utilisateur. Ainsi, lorsque le deuxième terminal se connecte au dispositif de gestion, le dispositif de gestion vérifiant le compte utilisateur notamment pour autoriser la connexion détecte un code de commande stocké, le lit et l'envoi au deuxième terminal 2 qui vient de se connecter.

Par conséquent, non seulement la lecture d'un code de commande est effectuée sur un premier terminal distant du deuxième terminal qui utilisera le code de commande, mais en plus la lecture est effectuée par le premier terminal 1 à un instant tₗ décorrélé de l'instant tᵤ d'utilisation par le deuxième terminal. Par instant décorrélé et/ou distant est entendu un instant qui n'est pas fonction de l'instant de lecture et des délais de transmission qui peut être lointain de l'instant de lecture. Cela permet notamment à l'utilisateur de capter, scanner, lire un code de commande en se promenant à l'extérieur de son domicile, notamment au moyen de son smartphone mais d'attendre d'être rentré chez lui ou à son bureau pour mettre en œuvre le code de commande par exemple sur son ordinateur portable ou fixe voire sur son téléviseur connecté...

La figure 5 illustre un schéma simplifié d'un transfert d'un code de commande d'un premier terminal à un deuxième terminal selon l'invention.

Notamment, le dispositif de gestion comporte une base de terminaux associés dans laquelle sont stockés des identifiants relatifs au premier terminal, notamment l'identifiant de lecteur du premier terminal id_{App_A}, des identifiants relatifs à un ou plusieurs deuxièmes terminaux, notamment l'identifiant de contrôleur du deuxième terminal id_{App_B}, ... id_{App_n}.

Le premier terminal 1 transmet un code de commande reçu par le premier terminal 1 d'un objet 3 (cf. figure 1) au dispositif de gestion 4 notamment dans un premier message mssg1(cc). Le premier message 1 est notamment formulé comme suit mqtt Publish(topic appA/aapB).

Le dispositif de gestion 4 transmet ensuite un signal de commande sc fonction du code de commande reçu au deuxième terminal. Soit le dispositif de gestion transmet directement le code de commande dans le signal de commande sc au deuxième terminal qui décodera et contrôlera le deuxième terminal en fonction du code de commande. Soit le dispositif de gestion 4 comporte un décodeur de code de commande et transmet au deuxième terminal 2 une commande fonction du code de commande décodé, en particulier lorsque le dispositif de gestion est un serveur d'intermédiation pour objets connectés.

Dans un mode de réalisation particulier, un code de commande lu par un premier terminal peut adresser en même temps plusieurs deuxième terminaux, en particulier plusieurs objets connectés ou clients IoT. Ainsi, un même code de commande lu par le premier terminal peut être utilisé par le dispositif de gestion 4 pour transmettre des commandes à plusieurs objets connectés 2.

Eventuellement, préalablement à la mise en oeuvre de l'invention, c'est-à-dire au transfert du code de commande d'un premier terminal 1 à un deuxième terminal 2, le premier terminal 1, en particulier le plug-in d'un navigateur du premier terminal 1, se connecte au dispositif de gestion 4 ou serveur au moyen d'un requête de connexion cnx_rq, tel qu'un websocket http://, en fournissant un identifiant du premier terminal 1.

Et, le deuxième terminal 2, en particulier le plug-in d'un navigateur du deuxième terminal 2, se connecte au dispositif de gestion 4 ou serveur au moyen d'un requête de connexion cnx_rq, tel qu'un websocket mqtt subscribe(topic AppA/AppB), en fournissant un identifiant du deuxième terminal 2.

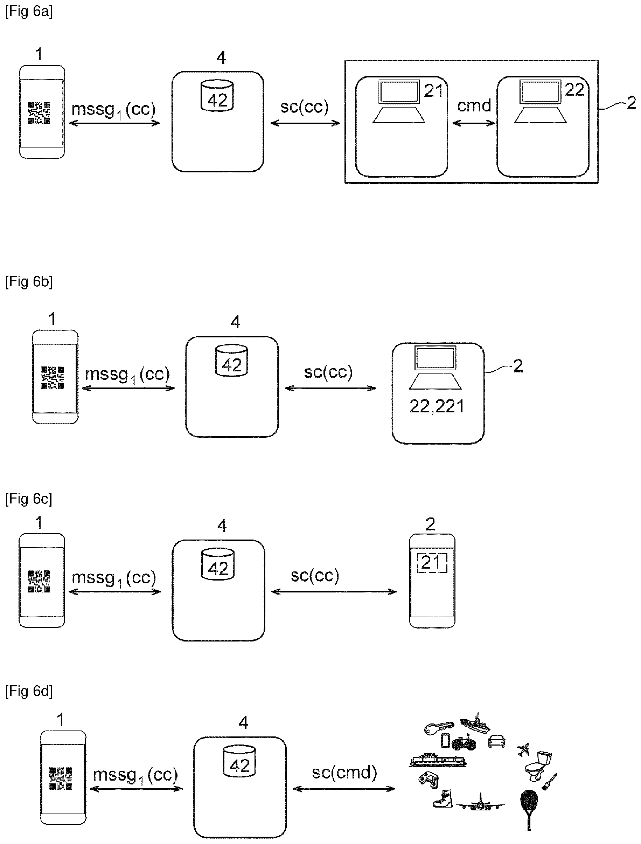

Les figures 6a à 6d des schémas simplifiés de différentes réalisations de transfert de code de commande. Dans ces exemples, le code de commande cc est un pictogramme à 2 dimensions, aussi nommé code 2D, tel qu'un code QR. Néanmoins, ces illustrations ne sont pas limitatives aux codes pictogrammes à 2 dimensions.

La figure 6a illustre un schéma simplifié d'un transfert d'un code de commande comportant une adresse Internet d'un premier terminal mobile à un deuxième terminal ordinateur implémentant dispositif/application de réception et décodage du code de commande selon l'invention.

Le premier terminal 1, en l'occurrence un terminal mobile, notamment au moyen d'une application de lecture mise en œuvre par le premier terminal 1, capte un code de commande et l'envoie dans un premier message mssg1(cc) au dispositif de gestion 4, notamment sous la forme suivante : mqtts://[id-pc]/[id-msisdn]/[id-app-mobile]/code-2D/serveur-code-2D-pc.com, le dispositif de gestion 4 y étant alors nommé « serveur-code-2D-pc ».

Le dispositif de gestion 4 transmet sc(cc) ensuite le code de commande reçu du premier terminal 1 au deuxième terminal 2, en l'occurrence un ordinateur comportant un contrôleur 21, notamment une application de contrôle mise en oeuvre par le deuxième terminal 2 et un composant 22, notamment apte à reproduire un contenu multimédia sont l'adresse est constitué par un lien résultant du décodage du code de commande. Le contrôleur 21 comporte en particulier un décodeur de code de commande et éventuellement est apte à contrôler le composant 22 au moyen de la commande décodée cmd.

La transmission du code de commande entre le dispositif de gestion 4 et le deuxième terminal 2, en particulier le contrôleur 21, est notamment formulée somme suit : mqtts://[id-pc]/[id-msisdn]/ [id-app-pc]/code-2D.

La figure 6b illustre un schéma simplifié d'un transfert d'un code de commande comportant une adresse Internet d'un premier terminal mobile à un deuxième terminal ordinateur implémentant un navigateur Internet comportant un dispositif/plug-inde réception et décodage du code de commande selon l'invention.

Le premier terminal 1, en l'occurrence un terminal mobile, notamment au moyen d'une application de lecture mise en œuvre par le premier terminal 1, capte un code de commande et l'envoie dans un premier message mssg1(cc) au dispositif de gestion 4, notamment sous la forme suivante : mqtts://[id-pc]/[id-msisdn]/[id-app-mobile]/code-2D/serveur-code-2D-pc.com, le dispositif de gestion 4 y étant alors nommé « serveur-code-2D-pc ».

Le dispositif de gestion 4 transmet sc(cc) ensuite le code de commande reçu du premier terminal 1 au deuxième terminal 2, en l'occurrence un ordinateur comportant un navigateur 22 comportant un plug-in de contrôle 221 en fonction de code de commande. Le plug-in de contrôle 221 comporte en particulier un décodeur de code de commande et éventuellement est apte à contrôler le navigateur 22 au moyen de la commande décodée cmd.

La transmission du code de commande entre le dispositif de gestion 4 et le deuxième terminal 2, en particulier le navigateur 22, est notamment formulée somme suit : mqtts://[id-pc]/[id-msisdn]/ [id-plug-in-pc]/code-2D.

La figure 6c illustre un schéma simplifié d'un transfert d'un code de commande d'un premier terminal mobile à un deuxième terminal mobile implémentant dispositif/application de réception et décodage du code de commande selon l'invention.

Le premier terminal 1, en l'occurrence un terminal mobile, notamment au moyen d'une application de lecture mise en oeuvre par le premier terminal 1, capte un code de commande et l'envoie dans un premier message mssg1(cc) au dispositif de gestion 4, notamment sous la forme suivante : mqtts://[id-msisdn]/[id-app-mobile]/code-2D/serveur-code-2D-pc.com, le dispositif de gestion 4 y étant alors nommé « serveur-code-2D-pc ».

Le dispositif de gestion 4 transmet sc(cc) ensuite le code de commande reçu du premier terminal 1 au deuxième terminal 2, en l'occurrence un autre terminal mobile, notamment à une application de contrôle mise en oeuvre par le deuxième terminal 2. La transmission du code de commande entre le dispositif de gestion 4 et le deuxième terminal 2 est notamment formulée somme suit : mqtts://[id-pc]/[id-msisdn]/ [id-app-pc]/code-2D. Le deuxième terminal 2, en particulier l'application de contrôle, décode le code de commande reçu du dispositif de gestion 4 et reproduit le résultat du décodage.

La figure 6d illustre un schéma simplifié d'un transfert d'un code de commande d'un premier terminal mobile à un deuxième terminal objet connecté, le dispositif de gestion de codes de commande comportant un serveur de médiation de l'Internet des objets permettant de commander les objets connectés en fonction du code de commande selon l'invention.

Le premier terminal 1, en l'occurrence un terminal mobile, notamment au moyen d'une application de lecture mise en oeuvre par le premier terminal 1, capte un code de commande et l'envoie dans un premier message mssg1(cc) au dispositif de gestion 4, notamment sous la forme suivante : mqtts://[id-msisdn]/[id-iot]/[id-app-mobile]/code-2D/serveur-code-2D-pc.com, le dispositif de gestion 4 y étant alors nommé « serveur-code-2D-pc ».

Le dispositif de gestion 4 décode ensuite le code de commande reçu du premier terminal 1, puis transmet sc(cmd) la commande décodée cmd au deuxième terminal 2, en l'occurrence un objet connecté. La transmission du code de commande entre le dispositif de gestion 4 et le deuxième terminal 2 est notamment formulée somme suit : mqtts://[id-iot]/[commande IOT. Le deuxième terminal 2 exécute la commande reçue.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Procédé de gestion de codes de commande mis en œuvre par un dispositif de gestion de codes de commande comportant une émission d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

2. Procédé de gestion de codes de commande selon la revendication précédente, dans laquelle le signal de commande comporte une des données suivantes :
- le code de commande reçu,
- une commande d'un composant du deuxième terminal, la commande étant déterminée par un décodage du code de commande reçu.

3. Procédé de contrôle mis en œuvre par un deuxième terminal ayant été associé à un premier terminal duquel est reçu un code de commande par un dispositif de gestion de codes de commande dont un signal de commande est fonction comportant une réception du signal de commande provenant du dispositif de gestion de codes de commande, le code de commande ayant été reçu par le premier terminal préalablement à l'émission et après l'association des premier terminal et deuxième terminal.

4. Procédé de contrôle selon la revendication précédente, comportant un décodage d'un code de commande, le signal de commande reçu comportant le code de commande préalablement transmis par le premier terminal au dispositif de gestion de codes de commande.

5. Procédé de lecture de codes de commande mis en œuvre par un premier terminal comportant une émission par le premier terminal d'un code de commande à destination d'un dispositif de gestion de codes de commande, l'émission étant déclenchée par une réception par le premier terminal du code de commande, le code de commande émis par le premier terminal déclenchant une émission, par le dispositif de gestion de codes de commande, d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

6. Procédé d'installation de terminaux associés par un dispositif de gestion de codes de commande comportant :
- un chargement d'un traitement de contrôle à destination d'un deuxième terminal,
- un chargement d'un traitement de lecture distant à destination d'un premier terminal, et
- un enregistrement de terminaux associés comportant le premier terminal et le deuxième terminal, l'enregistrement étant effectué préalablement à une réception de codes de commande par le premier terminal.

7. Procédé d'installation de terminaux associés selon la revendication précédente, dans lequel le chargement d'un traitement de contrôle à destination du deuxième terminal déclenche une émission par le deuxième terminal des terminaux associés au dispositif de gestion de codes de commande.

8. Procédé d'installation de terminaux associés selon l'une quelconque des revendications 8 ou 9 comportant une émission d'un signal d'installation à destination du premier terminal des terminaux associés, le signal d'installation permettant le chargement, par le dispositif de gestion de codes de commande, d'un traitement de lecture distant à destination du premier terminal.

9. Procédé d'association de terminaux traitant des codes de commande mis en œuvre par un deuxième terminal, le procédé d'association comportant :
- une association d'un premier terminal et du deuxième terminal formant des terminaux associés, et
- une émission des terminaux associés à destination d'un dispositif de gestion de codes de commande préalablement à une réception d'un code de commande par le premier terminal.

10. Programme comprenant des instructions de code de programme pour l'exécution des étapes du procédé de gestion de codes de commande selon l'une quelconque des revendications 1 ou 2, et/ou du procédé de contrôle selon l'une quelconque des revendications 3 ou 4, et/ou du procédé de lecture de codes de commande selon la revendication 5, et/ou du procédé d'installation selon l'une quelconque des revendications 6 à 8, et/ou du procédé d'association selon la revendication 9 lorsque ledit programme est exécuté par un processeur.

11. Dispositif de gestion de codes de commande comportant un émetteur d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.

12. Dispositif de gestion de codes de commande selon la revendication précédente comportant :
- un chargeur de traitements apte à charger un traitement de contrôle à destination d'un deuxième terminal et un traitement de lecture distant à destination d'un premier terminal ; et
- un enregistreur de terminaux associés comportant le premier terminal et le deuxième terminal, l'enregistrement étant effectué préalablement à une réception de codes de commande par le premier terminal.

13. Deuxième terminal ayant été associé à un premier terminal duquel est reçu un code de commande par un dispositif de gestion de codes de commande dont un signal de commande est fonction comportant un récepteur du signal de commande provenant du dispositif de gestion de codes de commande, le code de commande ayant été reçu par le premier terminal préalablement à l'émission et après l'association des premier terminal et deuxième terminal.

14. Deuxième terminal selon la revendication précédente comportant un coupleur apte à associer un premier terminal et un deuxième formant des terminaux associés et à émettre les terminaux associés à destination d'un dispositif de gestion de codes de commande préalablement à une réception d'un code de commande par le premier terminal.

15. Premier terminal comportant :
- un lecteur de codes de commande apte à recevoir un code de commande lu, et
- un émetteur de codes de commande à destination d'un dispositif de gestion de codes de commande,
le lecteur de codes de commande commandant l'émetteur de codes de commande lors d'une réception d'un code de commandes,
le code de commande émis par le premier terminal déclenchant une émission, par le dispositif de gestion de codes de commande, d'un signal de commande à destination d'un deuxième terminal ayant été associé à un premier terminal duquel est reçu un code de commande dont le signal de commande est fonction, le code de commande ayant été reçu par le premier terminal préalablement à l'émission et après l'association des premier terminal et deuxième terminal.
